# EUROPEAN PATENT SPECIFICATION

(11) **EP 0 479 941 B1**
(45) Date of publication and mention of the grant of the patent: **10.11.1993**
(21) Application number: 90917849.3
(22) Date of filing: 20.06.1990
(51) Int. Cl.: F16K 1/22

(54) **BALANCED-TORQUE BUTTERFLY VALVE**
DREHKLAPPENVENTIL MIT DREHMOMENTENAUSGLEICH
ROBINET PAPILLON A FORCE DE TORSION EQUILIBREE

(30) Priority: 30.06.1989 US 374897; 17.08.1989 US 395234; 16.10.1989 US 422354; 24.10.1989 US 426921; 06.06.1990 US 534091
(43) Date of publication of application: 15.04.1992
(73) Proprietor: AlliedSignal Inc., Morristown, New Jersey 07962-2245 (US)
(72) Inventor: ANDERSON, Blaine, W., Tempe, AZ 85283 (US); TERVO, John, N., Scottsdale, AZ 85253 (US); BALL, Larry, K., Chandler, AZ 85226 (US); HINES, Marshall, U., Scottsdale, AZ 85254 (US)
(74) Representative: Brock, Peter William
(86) International application number: US9003471
(87) International publication number: WO9100457

(56) References cited:
- EP-A- 0 320 490

## Description

Reference is made to the following copending and commonly-owned U.S. patent applications which disclose balanced-torque valves: serial no. 374,897, filed on 6/30/89; serial no. 395,234, filed on 8/17/89; serial no. 422,354, filed on 10/16/89; and serial no. 426,921, filed on 10/24/89.

### TECHNICAL FIELD

This invention relates generally to butterfly valves, and more specifically to those which incorporate structure that permits translational movement of the valve plate relative to the pivot mechanism.

### BACKGROUND OF THE INVENTION

European patent 0,320,490 discloses a butterfly-type shutoff valve having a valve plate which is movable in directions perpendicular thereto in order to effect seating and unseating. From the description below, it will be understood that the phrase "translational movement" as used herein refers to movement of the valve plate in a direction substantially parallel thereto.

In butterfly valves, translational movement of the valve plate relative to the pivot mechanism can be used to effect dynamic torque balancing, and to facilitate actuation by using the torque exerted by fluid on the plate to rotate the latter. To applicant's knowledge, these principles were first set forth in the above-referenced patent application serial number 374,897, filed on 6/30/89. They are schematically illustrated in FIGS. 12A-12C of the present application, wherein numerals 20, 22, 24, 26, and 28 indicate a valve plate, a pivot shaft, a duct, a bracket intersecuring the shaft and plate, and the direction of flow respectively. Arrow 30 and numeral 32 indicate the center of pressure associated with the forces exerted by fluid on the plate 20, and the pivot line about which the plate is rotatable.

In FIG. 12A, the shaft 22 is centered in relation to the longitudinal dimension of the plate 20 and the plate is in a closed position. The center of pressure 30 is aligned with the pivot line 32, so the net torque exerted by the fluid on the plate 20 is zero. If the plate 20 is rotated to an open position as illustrated in FIG. 12B, and translated relative to the shaft 22 so that the center of pressure 30 is aligned with the pivot line 32 as illustrated in FIG. 12C, then the plate is effectively torque-balanced and the flow rate associated with the rotational angle 34 can be maintained with minimal input force required from the actuator 36. If the translational movement is too limited in range to achieve torque balancing at all rotational positions of the plate 20, it can still be used to advantage in minimizing the net torque exerted by the fluid, thus still minimizing the input force required from the actuator 36.

If it is desired to change the rotational angle 34, then the plate 20 can be translated relative to the shaft 22 in the appropriate direction to effect a misalignment of the center of pressure 30 with the pivot line 32, thus increasing the net fluid dynamic torque, and the force required to effect the change is exerted in whole or in part by the fluid conveyed in the duct 24.

Butterfly valves that are designed to provide for translational movement of the plate 20 relative to the shaft 22, for either or both of the above-described purposes, are referred to herein as "balanced-torque" butterfly valves.

The balanced-torque butterfly valves illustrated in FIGS. 12A-12C may have disadvantages in some applications. Since the bracket 26 and shaft 22 protrude from the plate 20, the structure as a whole is not well streamlined from a fluid dynamics perspective. This may result in application-dependent problems which are believed to be attributable to the effect of the shaft 22 and bracket 26 as flow restrictors. For example, in tests conducted for balanced-torque butterfly valves which have the shaft 22 positioned on the downstream side of the plate 20, the plate maintained a stable equilibrium position when partially open, but stability was dependent on pressure ratio (i.e. inlet/outlet air pressure). Above a critical pressure ratio, the plate 20 would latch open (i.e. move suddenly to a rotational angle 34 of about ninety degrees). When the valve was tested with the shaft 22 on the upstream side of the plate 20 as indicated in FIGS. 12, considerable stability was observed for rotational angles 34 ranging from zero to slightly in excess of sixty degrees. Attempts to rotate the plate 20 out of an equilibrium position (i.e. a position at which the plate is translated relative to the shaft such that the center of pressure 30 is substantially aligned with the pivot line 32) were met with considerable aerodynamic torque resistance.

The current thinking is that the overall exterior shape of the valve plate 20 is the important variable in controlling the latching phenomenon, whereas resistance to rotational movement away from an equilibrium position is best controlled by translationally moving the plate out of the equilibrium position in order to facilitate rotation. In one aspect of the present invention, the latching problem is simplified by eliminating the fluid dynamic effects of the shaft 22 and the bracket 26.

Another disadvantage of previously described balanced-torque butterfly valves is that they sometimes are not well suited for providing feedback regarding the rotational position of the valve plate. That is, it is difficult to sense the rotational position of the valve plate from a location outside the duct unless the pivot shaft is in fixed rotational relationship with the valve plate. In addition, it may be desirable in many applications to provide for both rotational and translational movement of the valve plate via external actuation. A second aspect of the invention resides in the provision of a pivot mechanism which may be adapted to provide for both types of movement via external actuation, while simultaneously providing a ready means for determining the rotational position of the valve plate.

Another disadvantage relates to power transmission between the pivot shaft 22 and the plate 20. One method for translationally moving the plate 20 is to provide rack and pinion gears on the plate and shaft, respectively. However, when the plate 20 is subjected to pressure exerted thereon by the fluid conveyed in the flow path, the gears bear substantially the entire load. This may result in binding, and will almost certainly result in accelerated wear. A third aspect of the invention pertains to minimizing the load-bearing requirements of such power transmission components.

### DISCLOSURE OF THE INVENTION

The invention is a butterfly valve as defined in the claims. In general, such valves comprise a mounting body which defines a flow path for a fluid to be conveyed therethrough, a valve plate that is pivotally supported in the mounting body so that the plate can be rotationally moved to modulate fluid flow, and a pivot shaft supported in the mounting body and supporting the valve plate. This invention pertains to balanced-torque butterfly valves as described in the previous section.

In a first aspect of the present invention, the valve plate has a cavity formed therein, the cavity being appropriately shaped and dimensioned in relation to the pivot shaft to accommodate both receipt of the pivot shaft therein and translational movement of the valve plate relative to the pivot shaft. This arrangement provides the advantages associated with translational movement (the translational movement being in a direction substantially parallel to the plate) while removing the effect of the pivot shaft and other components as flow restrictors. Preferably, power transmission means for converting rotational movement of the pivot shaft to translational movement of the valve plate are also disposed in the cavity and secured to the pivot shaft and valve plate.

In a second aspect of the invention, the valve plate is supported in the flow path by a pivot mechanism which may be adapted to provide for bimodal movement of the valve plate. The pivot mechanism comprises a carrier shaft which is in fixed rotational relation to the valve plate and extends through the mounting body to provide a ready means of determining the rotational position of the plate, and a center shaft which is rotatable relative to the plate in order to provide for translational movement of the latter. The center shaft can be used in conjunction with a suitable gearing arrangement to translate the plate relative to the pivot mechanism, while the carrier shaft can be used to effect rotation.

A third aspect of the invention resides in the provision of a carrier, irrespective of whether the carrier is employed as a shaft to rotate the valve plate and/or provide position feedback as described above. The center shaft extends longitudinally through the carrier and is rotatable relative thereto. The carrier is appropriately designed to accommodate power transmission from the center shaft to the valve plate. In this or in functionally similar arrangements, the carrier can function as a load-bearing element that facilitates translational movement. This results from elimination of binding which might otherwise occur if power transmission components are required to bear the pressure exerted by fluid on the valve plate.

### BRIEF DESCRIPTION OF THE DRAWINGS

FIG. 1 is a perspective view of an assembled butterfly valve. Actuation of the valve is diagrammatically represented.

FIG. 2 is an exploded perspective view of the butterfly valve illustrated in FIG. 1.

FIG. 3 is a partially elevational, partially cross-sectional, and partially exploded view of various components illustrated in FIG. 2, including a pivot mechanism and a differential gear.

FIGS. 4-6 are cross-sectional views taken along the lines indicated in FIG. 3.

FIG. 7 is an elevational and truncated view of the pivot mechanism.

FIG. 8 is a top elevation of the valve plate illustrated in FIGS. 1 and 2.

FIG. 9 is a side elevation, in partial cross-section, of the valve plate illustrated in FIG. 8.

FIG. 10 is a partial, cross-sectional and partially elevational view of the butterfly valve, as viewed in a direction parallel to both the valve plate and the pivot mechanism.

FIG. 11 is an elevational and partially fragmented view taken along lines 11-11 of FIG. 10.

FIGS. 12A-12H are schematic illustrations of a balanced-torque butterfly valve showing various rotational and translational positions of the valve plate. These are provided to illustrate the principles and use of a butterfly valve as disclosed herein.

FIG. 13 is a schematic illustration wherein the butterfly valve incorporates a contemplated sealing arrangement in an application demanding a sealing function.

### BEST MODE FOR CARRYING OUT THE INVENTION

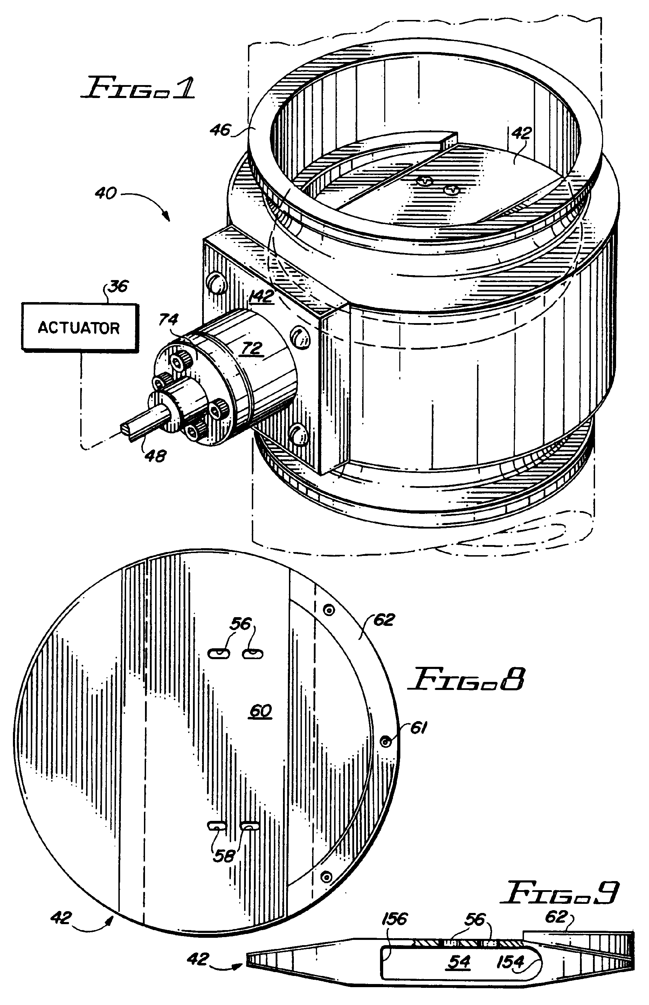

FIG. 1 of the accompanying drawings illustrates a butterfly valve 40 which is operable via an external actuator 36 to control the position of a valve plate 42. The valve plate 42 is pivotally disposed in and transects a flow path 44 (FIG. 10) defined by a mounting body 46.

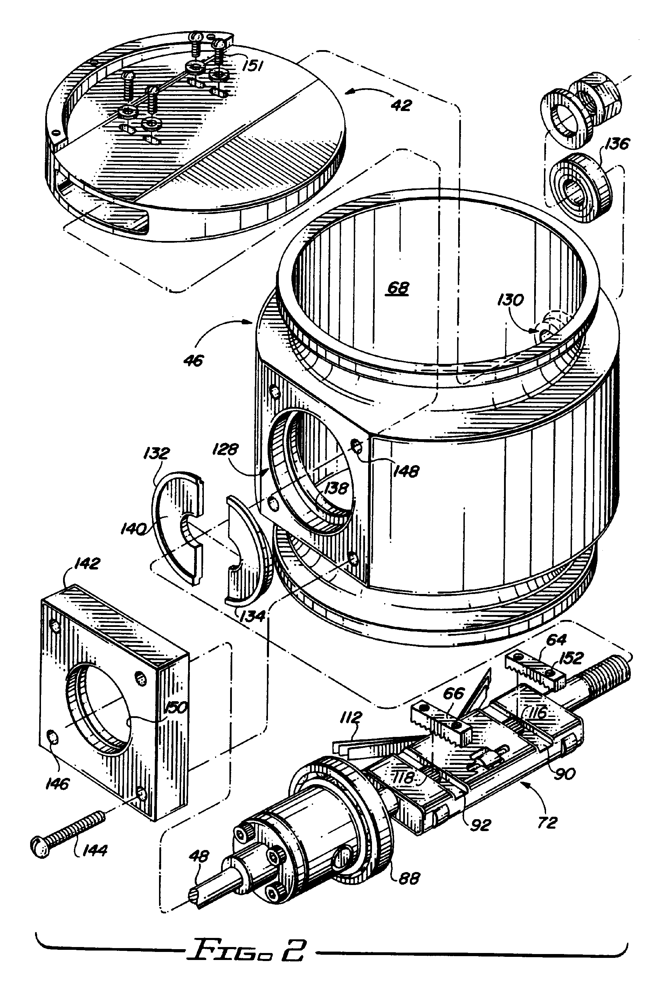

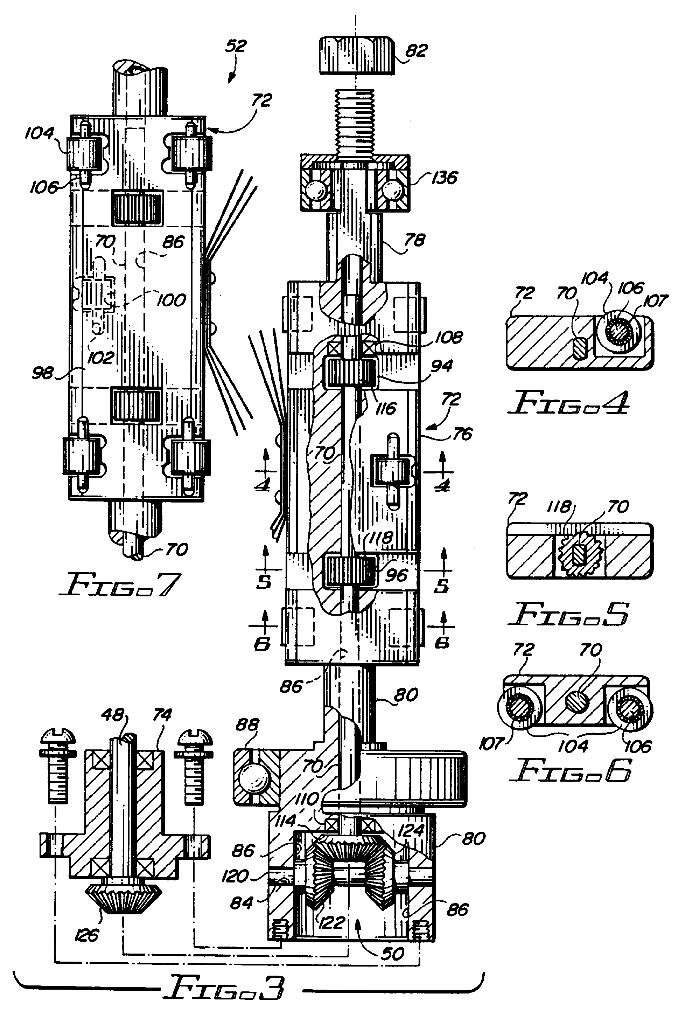

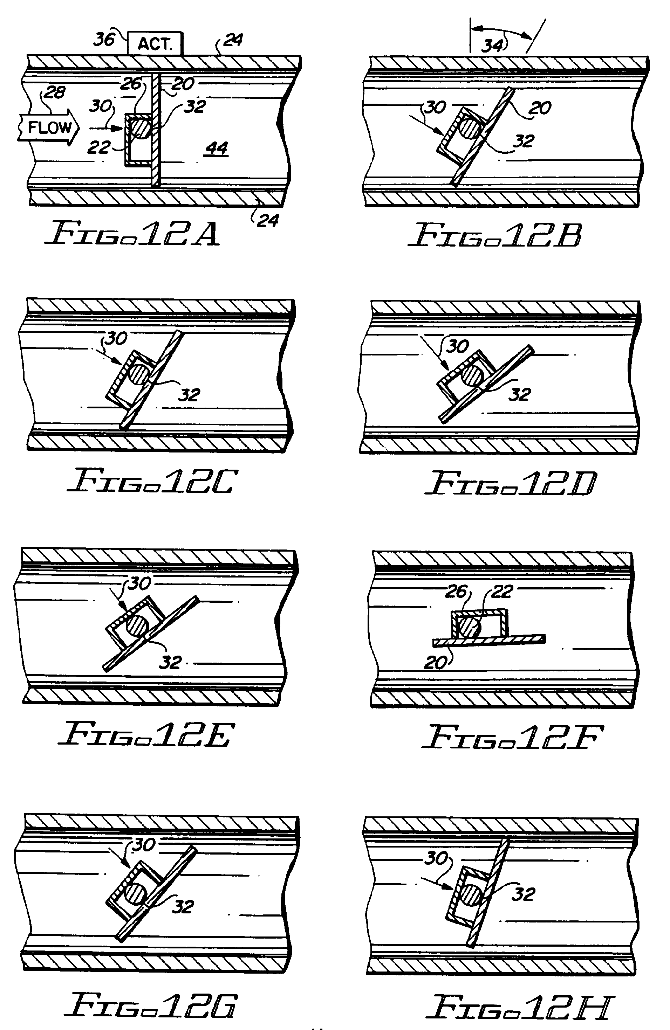

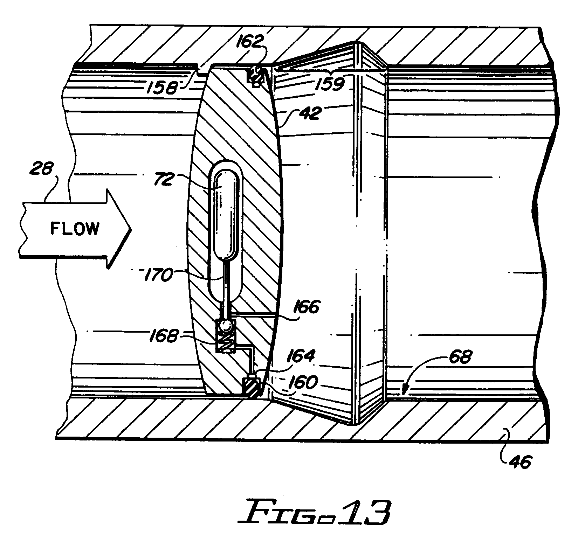

In use, duct members (not shown) are secured to the mounting body 46 to define an elongate flow path along which a fluid is conveyed from a source thereof, through the valve 40, and to one or more points of use. Fluid flow is controlled by rotationally positioning the valve plate 42. The positioning is achieved in response to torque applied by the actuator 36 to an input shaft 48. This torque is transmitted through a differential gear 50 (FIG. 3 - hereinafter, "differential") to a pivot mechanism 52 (FIG. 7) which pivotally supports the valve plate 42 and is journalled in the mounting body 46.

FIGS. 8 and 9 illustrate the valve plate 42 in more detail. The diameter of the circular valve plate 42 is slightly less than the inside diameter of the mounting body 46 in order to accommodate translational movement of the plate in the flow path 44. Translational movement of the valve plate 42 relative to the pivot mechanism 52 (FIG. 7) is accommodated by a suitably dimensioned cavity 54 extending through the plate as indicated. Slots 56, 58 are formed between the downstream-facing surface 60 of the plate and the cavity 54. Small tapped bores (not shown) extending into the plate receive screws 61 that secure an arcuate fence 62 to the plate near the leading edge of the latter. The slots 56, 58 are provided for securement of a pair of rack gears 64, 66 (FIG. 2) to the plate 42.

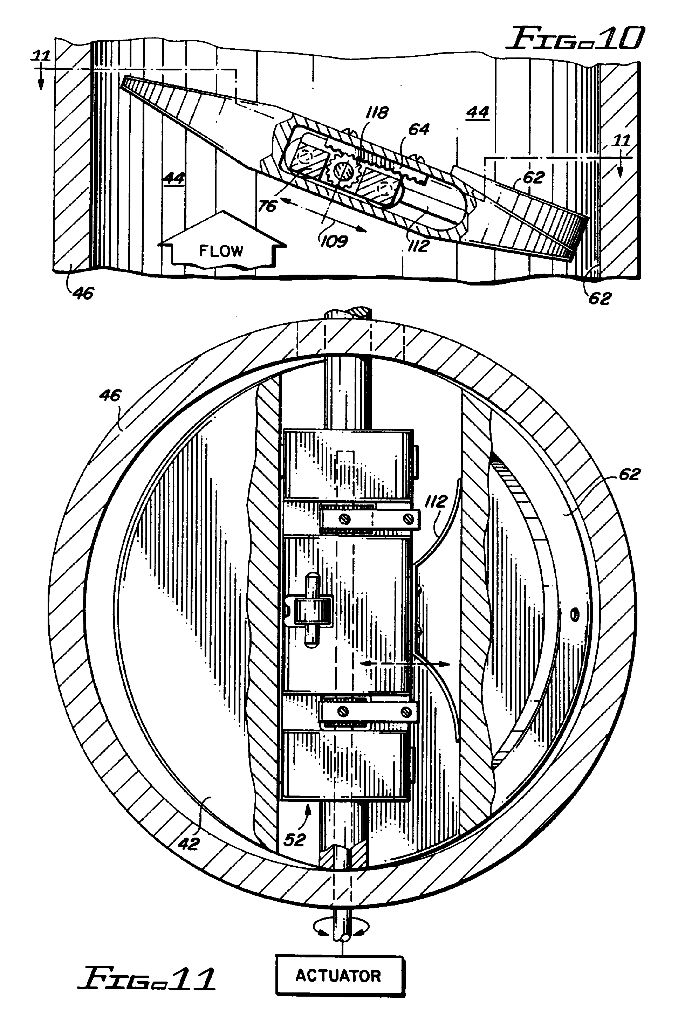

FIGS. 2, 3, and 7 illustrate the pivot mechanism 52 and differential 50 in detail. The pivot mechanism 52 comprises a center shaft 70 and a carrier shaft 72 (hereinafter, "carrier"). The carrier 72 has a centrally-disposed oblong portion 76 and two cylindrical end portions 78,80. One end portion 78 is threaded for engagement with a nut 82, and the other end portion 80 has a transversely-extending bore 84 formed therethrough. A longitudinally-extending stepped bore 86 is formed in the carrier 72 to accommodate receipt of the center shaft 70 and to provide a housing for the differential 50. The bore 86 is sufficiently large in diameter to permit rotation of the center shaft 70 therein. Transverse slots 90, 92 are milled in the central portion 76, and through-slots 94, 96 are formed from the transverse slots to the upstream-facing surface 98 of the carrier. The through-slots 94, 96 intersect the longitudinally extending bore 86 as indicated. Five deep recesses (as at 100) and associated cross-slots (as at 102) are milled in the carrier 72 for installation of five rollers (as at 104). Each roller 104 is rotatably secured to a small shaft (as at 106) via needle bearings 107 (FIG. 6). The shaft 106 is force-fitted in the cross-slot 102. The rollers 104 function as bearings to minimize friction between the carrier 72 and the valve plate 42 during translational movement 109 (FIG. 10) of the latter. The longitudinally-extending bore 86 is enlarged at two locations and bearings 108, 110 are inserted. A bearing 88 is also pressed onto the cylindrical portion 80 as shown. A leaf spring 112 is rigidly secured to the edge of the carrier 72 via screws extending into tapped bores. (Note: Although the illustrated prototype incorporates the leaf spring 112, it is believed that a more robust biasing mechanism is preferable for most applications. Accordingly, the leaf spring 112 can be replaced by two suitably mounted and positioned coil springs, or such other functionally equivalent biasing means as are required in a given application).

A first bevel gear 114 of the differential 50 is pressed onto the center shaft 70 near the indicated end which extends into the differential housing. The center shaft 70 is received in the longitudinally-extending bore 86 and extends through the bearings 108, 110, and through two pinion gears 116, 118 positioned in the through-slots 94, 96 as illustrated.

A cross-shaft 120 is pressed through the cross-bore 84 and through needle bearings (not shown) received in the axial bores (not shown) of second and third bevel gears 122, 124. The fourth bevel gear 126 of the differential 50 is pressed onto the input shaft 48. The input shaft 48 extends through a stepped axial bore in an end cap 74 and is pressed through bearings seated in the latter. The end cap 74 is then secured to the end of the carrier 72 as indicated, with the fourth bevel gear 126 engaging the second and third 122, 124, and the latter two engaging the first 114 to form the differential 50.

It will be understood that the first and fourth bevel gears 114, 126 are rigidly secured to the center shaft 70 and input shaft 48, respectively, whereas the second and third bevel gears 122, 124 are rotatably secured to the cross-shaft 120. When rotational torque is applied to the input shaft 48, it is transmitted through the differential 50 to the center shaft 70. If the center shaft 70 is free to rotate, then it will do so in response to rotation of the input shaft 48. However, if the center shaft 70 is constrained from rotating, then the torque is transmitted to the carrier 72 via the cross-shaft 120.

The rack gears 64, 66 are positioned in the transverse slots 90, 92 and in engagement with the pinion gears 116, 118. The valve plate 42 is held inside the mounting body 46 and the leaf spring 112 is depressed as the pivot mechanism 52 is extended through an access port 128 and the cavity 54 (FIG. 9) until the threaded end portion 78 projects through on opposite port 130 formed through the mounting body.

Two semi-annular baffles 132, 134 are positioned around the carrier 72 between the bearing 88 and the central portion 76, and against an annular rim or boss 138 of the mounting body 46. The inside-facing surfaces (those not visible in FIG. 2) of the baffles 132, 134 are contoured to conform with the inner surface 68 of the mounting body 46, and the surfaces are flush when the baffles are positioned as described.

The pivot mechanism 52 is further extended through the cavity 54 until the bearing 88 abuts an annular land 140 defined by the baffles 132, 134. A cover plate 142 abuts the opposite side of the bearing 88 and is secured to the mounting body 46 via screws (as at 144) extending through bores (as at 146) and into tapped bores (as at 148). The cover plate 142 circumferentially surrounds the end portion 80 and the latter, along with the input shaft 48, projects through a central bore 150 in the cover plate.

The rack gears 64, 66 are rigidly secured to the valve plate 42 via screws (as at 151) extending through the slots 56, 58 (FIG. 8) and into tapped bores (as at 152) formed in the rack gears. A bearing 136 is pressed into the port 130 between the cylindrical portion 78 and the mounting body 46, and the pivot mechanism 52 is finally secured by tightly engaging the nut 82 with the threaded end portion 78.

When the valve 40 is assembled, the center shaft 70 is centered in relation to the valve plate 42 so that, in use, the net fluid dynamic torque is substantially zero when the plate is in a closed position. The leaf spring 112 is preloaded and abuts one transversely-extending, inside surface 154 (FIG. 9) of the valve plate 42, while the rollers 104 on the other end of the carrier 72 abut the opposite transversely-extending, inside surface 156. At all times, the rollers 104 collectively abut both oppositely-facing and longitudinally-extending inside surfaces (not referenced by numerals, these are the surfaces which are generally parallel to the valve plate as viewed in FIGS. 9 and 10) of the valve plate 42. Accordingly, the carrier 52 and rollers 104 cooperate to bear the pressure exerted by fluid on the valve plate so that load-bearing by the rack and pinion gears 64, 66, 116, 118 is limited to that associated with power transmission. This is a distinct advantage provided by the carrier 52 and is usable in embodiments other than that illustrated. For example, the carrier 52 could be limited to the centrally-disposed portion 76, and the center shaft 70 could be journalled in the mounting body 46 and directly actuated (i.e. without using the differential 50). In that embodiment, the center shaft 70 serves as the pivot shaft and the forementioned advantage of the carrier is preserved.

When the input shaft 48 is rotated, the rotational torque is transferred to the center shaft 70 and the normal response, in the absence of the leaf spring 112, is rotation of the center shaft 70. Rotation of the center shaft 70 is accompanied by translational movement 109 of the valve plate 42 relative to the carrier 72 via coaction of the rack and pinion gears 64, 66, 116, 118. If the translational movement is impeded sufficiently to prevent rotation of the center shaft 70, then the response to rotation of the input shaft 48 is rotation of the carrier 72 and, consequently, rotation of the valve plate 42. Since the oblong portion 76 of the carrier 72 is generally conformal with the cavity 54 (allowing, however, for translational movement and the provision of rollers 104), the valve plate 42 and carrier coact to rotate together when either is rotated; and since the cylindrical end portion 80 of the carrier extends outwardly from the flow path 44 and through the mounting body 46, the rotational position of the valve plate is easily ascertainable from the exterior of the mounting body by reference to the rotational position of the carrier.

Impedance of translational movement can occur without use of the leaf spring 112 when the valve plate 42 is in the closed position, since the plate is then forced edgewise against the inside surface 68 of the mounting body 46. However, such an arrangement requires considerably higher initial opening torque since the impedance is accompanied by frictional forces between the mounting body 46 and valve plate 42. Accordingly, a biasing mechanism is employed so that rotational movement is the normal response when the valve plate 42 is moved from the closed position. In open rotational positions, the valve plate 42 moves rotationally in response to rotation of the input shaft 48 so long as impedance to rotational movement--the impedance resulting from net fluid dynamic torque--is insufficient to overcome the impedance to translational movement that results from the spring force. When the impedance to rotational movement is sufficiently high, (i.e. when the center of pressure 30 is sufficiently misaligned with the pivot line 32 as illustrated in FIGS. 12, the pivot line of the preferred embodiment being the longitudinal axis of the carrier 72), then the valve plate 42 moves translationally to decrease the net torque until the impedance is again insufficient to overcome that resulting from the spring force.

In applications which demand sealing in the closed rotational position, a conventional rim seal can be provided around the circumferential periphery of the valve plate 42. This may limit translational movement too much, which in turn may require suitable shaping of the inside surface 68 of the mounting body 46 in order to accommodate the required movement. Alternatively, a suitably shaped inside surface 46 in combination with conventional face seals may be workable. FIG. 13 illustrates a contemplated arrangement in which fluid communication is sealingly closed with the valve plate 42 at a rotational angle of approximately zero. The mounting body 46 is adapted to provide a suitable stop 158 in order to prevent undesired rotational movement of the valve plate 42. To accommodate translational movement, the inside surface 68 of the mounting body 46 is radially extended over a range 159 immediately downstream from an annular recess 160 formed in the circumferential edge of the valve plate 42. The recess 160 is offset from the carrier 72 to provide circumferentially continuous sealing. A seal 162 is seated in the recess 160 and abuts the inside surface 68. A potential difficulty in butterfly valves which employ rim seals in high-pressure-ratio applications is that the high-pressure fluid on the upstream side of the valve plate 42 gets between the recess 160 and the seal 162. The fluid exerts radially outward force on the seal 162, which puts the seal in more aggressive contact with the inside surface 68. While that effect may be desirable for sealing purposes, it has the undesirable consequence of increasing the torque required to initially open the valve. Accordingly, in the FIG. 13 arrangement the valve plate 42 is adapted to provide one-way fluid communication from the recess 160 to the downstream side of the plate in order to relieve the forementioned outward pressure exerted on the seal 162. This is accomplished by forming an inner annulus 164 which fluidically connects the recess 160 to a flow passage 166. The passage 166 extends from the annulus 164 to the downstream-facing surface of the valve plate 42, and is blocked by a check valve 168. A push rod 170 is rigidly secured to the carrier 72 and is in contact with the check valve 168 so that a very slight translational movement of the valve plate 42 results in opening the check valve. In the closed position illustrated, the seal 162 impedes rotational movement of the valve plate 42 to a greater degree than the spring 112 (FIG. 2) impedes translational movement. Accordingly, when the valve plate 42 is sealingly closed as shown, rotation of the input shaft 48 (FIG. 2) results in rotation of the center shaft 70, and the valve plate is translated very slightly relative to the carrier 72. This slight translational movement opens the check valve 168, thus relieving the radially outward pressure exerted on the seal 162 and decreasing impedance to rotational movement of the valve plate 42. Use of the check valve 168 for both biasing (i.e. as an equivalent to the leaf spring 112 of FIG. 2) and seal-venting purposes is a possibility that has not been fully explored.

It should be understood that although a circular valve plate 42 is illustrated, the invention is equally applicable in a rectangular valve plate/rectangular duct arrangement, and that the term "butterfly valve" as used herein is intended to include such structures.

Use of the valve 40 will now be described with reference to FIGS. 12A-12F. The valve plate 20, which is initially at a first rotational position (FIG. 12A) maximally closing fluid communication along the flow path 44, is rotationally moved away from the first position toward a second rotational position (FIG. 12F) maximally permitting fluid communication. The valve plate 20 is subjected to a net torque exerted by the fluid conveyed along the path 44 and the torque increases with the rotational movement as the center of pressure 30 moves below the pivot line 32, this being illustrated in FIG. 12B. The valve plate 20 is translationally moved relative to the shaft 22 so that the center of pressure 30 is more closely aligned with the pivot line 32, thus decreasing the net torque, as illustrated in FIG. 12C. Continued rotational movement toward the second position (FIG. 12F), facilitated by the translational movement, is effected with a concomitant increase in the net torque as the center of pressure 30 again moves relative to the pivot line 32, this being illustrated in FIG. 12D. Continued translational movement again more closely aligns the center of pressure 30 with the pivot line 32 so that further rotational movement toward the second position (FIG. 12F) is facilitated, as indicated in FIG. 12E.

Rotational movement of the valve plate 20 continues until the plate reaches a desired rotational position (as in FIG. 12E) associated with a desired flow rate. The translational movement facilitates the rotational movement and, since the net torque exerted by the fluid on the plate is minimized via the translational movement, minimizes the load on the actuator 36 at the desired rotational position.

The overall movement of the valve plate is characterized by both rotational and translational components, although it may be substantially continuous between one rotational position and another. Thus, the progression indicated by FIGS. 12A-12E exaggerates the discreteness of successive translational or rotational components, to the end of providing an easily understood illustration of the overall movement.

FIGS. 12G and 12H illustrate the movement in reverse. That is, starting from a rotational position such as that illustrated in FIG. 12E where the valve plate 20 is substantially torque-balanced, the plate is rotationally moved toward the first position (FIG. 12A), thus effecting a greater degree of misalignment between the center of pressure 30 and the pivot line 32, as illustrated in FIG. 12G. The valve plate 20 is also translationally moved as illustrated in FIG. 12H to effect a lesser degree of misalignment, thus facilitating further rotational movement toward the first position.

The reader should understand that the foregoing portion of the description, which description includes the accompanying drawings, is not intended to restrict the scope of the invention to the preferred embodiment thereof or to specific details which are ancillary to the teaching contained herein. The invention should be construed in the broadest manner which is consistent with the following claims.

## Claims

1. A butterfly valve, comprising a mounting body (46) defining a flow path (44) for a fluid to be conveyed therethrough; a valve plate (42) disposed in the flow path and pivotally supported therein; and a pivot mechanism (52) for pivotally supporting the valve plate in the path;
characterized in that the valve plate is supported by the pivot mechanism such that the valve plate is capable of translational movement relative thereto in directions substantially parallel to the valve plate and substantially perpendicular to the pivot mechanism, and is rotationally movable over a range of rotational positions in order to variably permit flow along the path; the pivot mechanism comprising a carrier (72) relative to which the valve plate is translationally movable in said directions and which is secured to the valve plate so as to rotate therewith over the range of rotational positions, and a shaft (70) relative to which the valve plate is translationally movable in said directions and which is rotatable relative to the carrier and secured thereto; and further comprising power transmission gears (64, 66, 116, 118) secured to the valve plate and shaft for converting rotational movement of the shaft to said translational movement of the valve plate; whereby the valve is operable to rotationally move the valve plate in response to rotational movement of the carrier so that flow along the flow path can be altered, and to translationally move the valve plate relative to the pivot mechanism in said directions in response to rotational movement of the shaft so that net torque exerted on the valve plate by the fluid can be altered.

2. The butterfly valve of Claim 1 further comprising bearings (104) for minimizing friction during translational movement of the valve plate relative to the carrier.

3. The butterfly valve of Claim 2 wherein the bearings are secured to the carrier and abut the valve plate.

4. The butterfly valve of Claim 2 wherein the carrier and bearings are cooperative to limit load-bearing by the gears when the valve plate is subjected to pressure exerted thereon by the fluid.

5. The butterfly valve of Claim 4 wherein the bearings are secured to the carrier and abut the valve plate.

6. The butterfly valve of Claim 4 wherein the carrier is a second shaft having a centrally-disposed, longitudinally-extending portion (76) which is substantially coextensive with the valve plate and two longitudinally-extending end portions (78, 80) separated by the centrally-disposed portion and journalled in the mounting body.

7. The butterfly valve of Claim 6 wherein one of the end portions extends through the mounting body outside of the flow path whereby the rotational position of the valve plate is ascertainable by reference to the rotational position of the one end portion.

8. The butterfly valve of Claim 7 wherein the shaft is journalled in the second shaft.

9. The butterfly valve of Claim 1 wherein the carrier is a second shaft comprising a first longitudinally-extending portion journalled in and extending through the mounting body outside of the flow path whereby rotational position of the valve plate is ascertainable by reference to rotational position of the longitudinally-extending portion, and a second longitudinally-extending portion substantially coextensive with the valve plate.

10. The butterfly valve of Claim 9 wherein the valve plate has a cavity (54) formed therein, the cavity being coextensive with the valve plate in a direction substantially transverse to the flow path; substantially the entire second longitudinally-extending portion of the second shaft extending into the cavity whereby fluid flow along the path is substantially unobstructed by the second shaft.

## Patentansprüche

1. Drehklappenventil mit einem Montagekörper (46), der einen Strömungsweg (44) für ein durch ihn hindurchzuführendes Fluid begrenzt; eine Ventilplatte (42), die im Strömungsweg angeordnet und darin schwenkbar gelagert ist; und ein Schwenkmechanismus (52) zum schwenkbaren Tragen der Ventilplatte in dem Wege;
dadurch gekennzeichnet, daß die Ventilplatte durch den Schwenkmechanismus derart getragen ist, daß die Ventilplatte zu einer Verschiebebewegung in einer zur Ventilplatte im wesentlichen parallelen und zum Schwenkmechanismus im wesentlichen senkrechten Richtung relativ dazu befähigt und über einen Bereich von Drehstellungen drehbeweglich ist, um eine Strömung entlang des Weges in variabler Weise zu gestatten; wobei der Schwenkmechanismus einen Trager (72) aufweist, relativ zu dem die Ventilplatte in den genannten Richtungen verschiebbar ist, und der an der Ventilplatte befestigt ist, so daß er mit ihr über den Bereich von Drehstellungen rotiert, sowie eine Welle (70), relativ zu der die Ventilplatte in den genannten Richtungen verschiebbar beweglich ist und die relativ zum Träger drehbar und daran befestigt ist; und daß ferner ein an der Ventilplatte und der Welle befestigtes Kraftübertragungsgetriebe (64, 66, 116, 118) zum Umwandeln der Drehbewegung der Welle in die Verschiebebewegung der Ventilplatte vorgesehen ist; wodurch das Ventil so betreibbar ist, daß die Ventilplatte als Reaktion auf eine Drehbewegung des Trägers eine Drehbewegung ausführt, so daß die Strömung entlang des Strömungsweges verändert werden kann, und die Ventilplatte als Reaktion auf eine Drehbewegung der Welle eine Verschiebebewegung relativ zum Schwenkmechanismus in den genannten Richtungen ausführt, so daß das vom Fluid auf die Ventilplatte ausgeübte Nettodrehmoment verändert werden kann.

2. Drehklappenventil nach Anspruch 1, welches ferner Lager (104) zum Minimieren der Reibung während der Verschiebebewegung der Ventilplatte relativ zum Träger aufweist.

3. Drehklappenventil nach Anspruch 2, bei dem die Lager am Träger befestigt sind und an der Ventilplatte anliegen.

4. Drehklappenventil nach Anspruch 2, bei dem der Träger und die Lager derart zusammenwirken, daß sie die Lastaufnahme durch das Getriebe begrenzen, wenn die Ventilplatte durch einen vom Fluid auf sie ausgeübten Druck unterworfen ist.

5. Drehklappenventil nach Anspruch 4, bei dem die Lager am Träger befestigt sind und an der Ventilplatte anliegen.

6. Drehklappenventil nach Anspruch 4, bei dem der Träger eine zweite Welle mit einem mittig angeordneten, sich der Länge nach erstreckenden Teil (76) ist, der sich im wesentlichen in gleicher Richtung wie die Ventilplatte erstreckt, sowie zwei sich der Länge nach erstreckende Endteile (78, 80), die durch den mittig angeordneten Teil voneinander getrennt und im Montagekörper gelagert sind.

7. Drehklappenventil nach Anspruch 6, bei dem einer der Endteile sich durch den Montagekörper hindurch aus dem Strömungsweg heraus erstreckt, wodurch die Drehlage der Ventilplatte durch Bezugnahme auf die Drehlage des einen Endteiles feststellbar ist.

8. Drehklappenventil nach Anspruch 7, bei dem die Welle in der zweiten Welle gelagert ist.

9. Drehklappenventil nach Anspruch 1, bei dem der Träger eine zweite Welle ist, die einen ersten sich der Länge nach erstreckenden Teil aufweist, der im Montagekörper gelagert ist und sich durch diesen hindurch vom Strömungsweg auswärts erstreckt, wodurch die Drehlage der Ventilplatte durch Bezugnahme auf die Drehlage des sich der Länge nach erstreckenden Teiles feststellbar ist, sowie einen zweiten sich der Länge nach erstreckenden Teil, der sich im wesentlichen in gleicher Richtung wie die Ventilplatte erstreckt.

10. Drehklappenventil nach Anspruch 9, bei dem die Ventilplatte einen darin ausgebildeten Hohlraum (54) besitzt, welcher Hohlraum sich in gleicher Richtung wie die Ventilplatte erstreckt, welche Richtung im wesentlichen quer zum Strömungsweg verläuft; wobei sich im wesentlichen der gesamte zweite sich der Länge nach erstreckende Teil der zweiten Welle in den Hohlraum hineinerstreckt, wodurch die Fluidströmung entlang des Weges durch die zweite Welle im wesentlichen ungestört ist.

## Revendications

1. Robinet papillon comprenant un corps de montage (46) définissant un trajet d'écoulement (44) pour un fluide devant être acheminé par l'intermédiaire de celui-ci; un plateau de robinet (42) disposé dans le trajet d'écoulement et monté de façon pivotante dans celui-ci; et un mécanisme de pivotement (52) pour soutenir de façon pivotante le plateau de robinet dans ce trajet;
caractérisé en ce que le plateau de robinet prend appui sur le mécanisme de pivotement de telle manière que le plateau de robinet soit capable d'un mouvement de translation par rapport à celui-ci dans des directions sensiblement parallèles au plateau de robinet et sensiblement perpendiculaires au mécanisme de pivotement, dans une certaine gamme de positions de rotation pour permettre un écoulement variable le long du trajet; le mécanisme de pivotement comprenant un porteur (72) par rapport auquel le plateau de robinet est mobile en translation dans lesdites directions et qui est fixé au plateau de robinet de façon à tourner avec celui-ci dans une certaine gamme de positions de rotation, et un arbre (70) par rapport auquel le plateau de robinet est mobile en translation dans lesdites directions, et qui peut être mis en rotation par rapport au porteur et fixé à celui-ci; et comprenant en outre des engrenages de transmission de puissance (64, 66, 116, 118) fixés au plateau de robinet et à l'arbre pour convertir le mouvement de rotation de l'arbre en ledit mouvement de translation du plateau de robinet; de telle sorte que le robinet puisse être actionné de manière à entrainer en rotation le plateau de robinet en réponse à un mouvement de rotation du support afin qu'un écoulement le long du trajet d'écoulement puisse être modifié, et pour entrainer en translation le plateau de robinet par rapport au mécanisme de pivotement dans lesdites directions en réponse à un mouvement de rotation de l'arbre de telle manière que le couple total exercé sur le plateau de robinet par le fluide puisse être modifié.

2. Robinet papillon selon la revendication 1, comprenant en outre des roulements (104) pour minimiser le frottement lors du mouvement de translation du plateau de robinet par rapport au support.

3. Robinet papillon selon la revendication 2, dans lequel les roulements sont fixés au porteur et sont en butée sur le plateau de robinet.

4. Robinet papillon selon la revendication 2, dans lequel le support et les roulements coopèrent pour limiter la charge supportée par les engrenages lorsque le plateau de robinet est soumis à la pression exercée sur celui-ci par le fluide.

5. Robinet papillon selon la revendication 4, dans lequel les roulements sont fixés au support et sont en butée sur le plateau de robinet.

6. Robinet papillon selon la revendication 4, dans lequel le porteur est un arbre secondaire ayant une partie s'étendant longitudinalement, disposée centralement (76) qui est sensiblement de même étendue que le plateau de robinet et deux parties d'extrémité s'étendant longitudinalement (78, 80) séparées par la partie disposée centralement et reposant sur le corps de montage.

7. Robinet papillon selon la revendication 6, dans lequel les parties d'extrémité traversent le corps de montage à l'extérieur du trajet d'écoulement de façon à ce que la position de rotation du plateau de robinet puisse être déterminée avec certitude par référence à la position de rotation de cette partie d'extrémité.

8. Robinet papillon selon la revendication 7, dans lequel l'arbre repose à l'intérieur de l'arbre secondaire.

9. Robinet papillon selon la revendication 1, dans lequel le porteur est un arbre secondaire comprenant une première partie s'étendant longitudinalement reposant sur et s'étendant au travers du corps de montage à l'extérieur du trajet d'écoulement, de façon à ce que la position de rotation du plateau de robinet puisse être déterminée avec certitude par référence à la position de rotation de la partie s'étendant longitudinalement, et une seconde partie s'étendant longitudinalement d'étendue sensiblement identique à celle du plateau de robinet.

10. Robinet papillon selon la revendication 9, dans lequel le plateau de robinet a une cavité (54) formée dans celui-ci, la cavité étant de même étendue que le plateau de robinet dans une direction sensiblement transversale au trajet d'écoulement; la seconde partie s'étendant longitudinalement du second arbre s'étendant pratiquement entièrement à l'intérieur de la cavité de façon à ce que l'écoulement du fluide le long du trajet ne soit pratiquement pas obstrué par le second arbre.
